# EUROPÄISCHE PATENTSCHRIFT

(11) **EP 2 314 839 B1**
(45) Veröffentlichungstag und Bekanntmachung des Hinweises auf die Patenterteilung: **02.03.2016**
(21) Anmeldenummer: 10187720.7
(22) Anmeldetag: 15.10.2010
(51) Int. Cl.: F01N 13/08, F01N 1/14, F01N 3/05

(54) **Vorrichtung zur Kühlung eines Abgasstroms**
Device for cooling of an exhaust gas stream
Dispositif destiné au refroidissement d'un flux de gaz d'échappement

(30) Priorität: 19.10.2009 DE 102009045801
(43) Veröffentlichungstag der Anmeldung: 27.04.2011
(73) Patentinhaber: DEERE & COMPANY, Moline, Illinois 61265-8098 (US)
(72) Erfinder: Ochsner, Scott D., Cedar Falls, IA 50613 (US); Romain, Brunet, 68199, Mannheim (DE)
(74) Vertreter: Dehnhardt, Florian Christopher

(56) Entgegenhaltungen:
- EP-A1- 0 036 643
- DE-A1- 2 345 803
- JP-A- 62 131 927
- US-A- 2 548 563

## Beschreibung

Die Erfindung betrifft eine Vorrichtung zur Kühlung eines Abgasstroms, mit einem den Abgasstrom aufnehmenden Abgasrohr, wobei das Abgasrohr zumindest abschnittsweise von einem beabstandet angeordneten Hitzemantel umgeben ist, der mit einer Außenseite des Abgasrohrs einen Konvektionsbereich für aus der Umgebung zugeführte Luft bildet.

Derartige Abgasanlagen, bestehend aus einem Abgasrohr zur Ableitung eines aus einem Dieselmotor austretenden Abgasstroms und einem an einer Außenseite des Abgasrohrs beabstandet angeordneten Hitzemantel in Gestalt einer rohrförmigen Abdeckung, sindunter anderem von landwirtschaftlichen Traktoren der Serie 6030 des Herstellers John Deere bekannt.

Die von der Europäischen Union erlassenen Abgasnormen sehen hierbei eine schrittweise Reduzierung der von Dieselmotoren erzeugten und mit dem Motorabgas in die Umgebung ausgestoßenen Rußpartikel vor. Die Beschränkung des Rußpartikelausstoßes erfolgt durch Verwendung von Rußpartikelfiltern, in der Regel mit sogenannten Wandstromfiltern, bei denen das Motorabgas eine poröse Filterwand aus einem keramischen oder metallischen Werkstoff durchdringt. Die im Motorabgas enthaltenen Rußpartikel lagern sich hierbei sowohl auf der Oberfläche als auch im Inneren der Filterwand ab, sodass der Abgasgegendruck mit zunehmendem Zusetzungsgrad der Filterwand ansteigt. Zur Regeneration des Rußpartikelfilters werden daher in regelmäßigen Zeitabständen die abgelagerten Rußpartikel verbrannt, wozu die Temperatur des Motorabgases - beispielsweise mittels eines dem Rußpartikelfilter vorgeschalteten Oxidationskatalysators - zeitweise auf Temperaturen über 500 °C erhöht wird. Während der Regeneration können am Auspuffendrohr der Abgasanlage dementsprechend hohe Abgastemperaturen auftreten, die unter Umständen zur Entstehung unerwünschter Stickoxide führen.

Aus der US 2 548 563 A ist ein Schalldämpfer für einen Verbrennungsmotor bekannt, der ein abgasführendes Innenrohr sowie ein das Innenrohr umgebendes Außenrohr umfasst. Eine in einem auslassseitigen Endbereich des Innenrohrs angeordnete düsenförmige Blende ragt derart in einen nachgeschalteten Auslassstutzen hinein, dass im Bereich mehrerer Einsaugöffnungen des Auslassstutzens und damit in einem zwischen dem Innen- und Außenrohr verlaufenden Durchgangsspalt ein Unterdruck erzeugbar ist. Auf diese Weise lässt sich über eine gelochte Platte eingesaugte Umgebungsluft an der Außenoberfläche des Innenrohrs zum Zweck der Kühlung entlangleiten.

Ferner geht aus der WO 2008/060559 A2 eine Vorrichtung zur Verringerung der Abgastemperatur an einem Auspuffendrohr hervor. Die an dem Auspuffendrohr mittels einer Klammer oder Klemme anbringbare Vorrichtung umfasst eine Düse, die mittels mehrerer radial angeordneter Haltestreben derart an einem angrenzenden Umlenkergehäuse angebracht ist, dass sich beim Hindurchtreten des Abgasstroms in einem zwischen der Düse und dem Umlenkergehäuse ausgebildeten Einlass ein Teilvakuum zur Ansaugung kühlerer Umgebungsluft erzeugen lässt. Die sich in Durchtrittsrichtung des Abgasstroms verjüngende Form der Düse bzw. des Umlenkergehäuses führt jedoch zu einer unerwünschten Erhöhung des Abgasgegendrucks in der Abgasanlage.

Es ist daher Aufgabe der vorliegenden Erfindung, eine Vorrichtung der eingangs genannten Art zu schaffen, die eine Kühlung eines insbesondere aus einem Dieselpartikelfilter austretenden Abgasstroms ohne unerwünschte Erhöhung des Abgasgegendrucks im Bereich eines Auspuffendrohrs ermöglicht.

Diese Aufgabe wird durch eine Vorrichtung mit den Merkmalen des Patentanspruchs 1 gelöst.

Die erfindungsgemäße Vorrichtung zur Kühlung eines Abgasstroms umfasst ein den Abgasstrom aufnehmendes Abgasrohr, wobei das Abgasrohr zumindest abschnittsweise von einem beabstandet angeordneten Hitzemantel umgeben ist, der mit einer Außenseite des Abgasrohrs einen Konvektionsbereich für aus der Umgebung zugeführte Luft bildet. Ein gegenüber dem Hitzemantel verlängerter Mündungsbereich des Abgasrohrs ragt derart in ein offenes Ende eines angrenzenden Auslassstutzens hinein, dass in einem zwischen dem Mündungsbereich des Abgasrohrs und dem Auslassstutzen ausgebildeten Ansaugbereich beim Aufsteigen der aufgrund des Abgasstroms im Konvektionsbereich erhitzten Luft ein Unterdruck gegenüber der Umgebung erzeugbar ist, wobei der Auslassstutzen bezüglich des Hitzemantels derart beabstandet angeordnet ist, dass gegenüberliegende Endbereiche des Auslassstutzens und des Hitzemantels eine mit dem Ansaugbereich in Verbindung stehende ringförmige Ansaugöffnung bilden. Genauer gesagt bildet der mittels des Hitzemantels umgebene Mündungsbereich des Abgasrohrs eine mit dem Auslassstutzen derart zusammenwirkende Düse, dass beim Aufsteigen der im Konvektionsbereich erhitzten Luft aufgrund des Venturieffekts ein Unterdruck im Ansaugbereich hervorgerufen wird.

Da die Düse außerhalb des Abgasstroms angeordnet ist, kann eine unerwünschte Erhöhung des Abgasgegendrucks im Bereich des Auspuffendrohrs vermieden werden. Die aufgrund des Unterdrucks in den Auslassstutzen gesaugte Umgebungsluft führt dabei je nach deren Temperatur zu einer entsprechenden Abkühlung des am Auslassstutzen und damit am Auspuffendrohr austretenden Abgasstroms.

Der Ansaugbereich kann hierbei von einem Filterelement, insbesondere von einem Lochgitter umgeben sein. Die Öffnungen des Lochgitters sind derart bemessen, dass vor allem gröbere Verunreinigungen, die zu einem raschen Zusetzen oder zu einem Verstopfen des Ansaugbereichs führen würden, zuverlässig zurückgehalten werden.

Vorteilhafte Weiterbildungen gehen aus den Unteransprüchen hervor.

Vorzugsweise weist das Abgasrohr zumindest im Mündungsbereich einen in vertikaler Richtung orientierten Verlauf auf, sodass ein Aufsteigen der erhitzten Luft im Konvektionsbereich begünstigt wird. Das Abgasrohr kann beispielsweise Bestandteil einer Abgasanlage eines als Traktor ausgebildeten landwirtschaftlichen Nutzfahrzeugs sein.

Des Weiteren ist es denkbar, dass der Ansaugbereich als zwischen dem Auslassstutzen und dem Abgasrohr radial verlaufender erster Ringspalt und/oder der Konvektionsbereich als zwischen dem Hitzemantel und dem Abgasrohr radial verlaufender zweiter Ringspalt ausgebildet ist. Demgemäß weisen das Abgasrohr, der Hitzemantel sowie der Auslassstutzen einen zumindest im Mündungsbereich des Abgasrohrs im Wesentlichen kreisförmigen Querschnitt auf. Hierbei wird eine konzentrische Anordnung des Hitzemantels sowie des Auslassstutzens gegenüber dem Mündungsbereich des Abgasrohrs bevorzugt.

Der erste Ringspalt kann im Mündungsbereich des Abgasrohrs einen mit dem zweiten Ringspalt übereinstimmenden oder gegenüber diesem verringerten Außendurchmesser aufweisen. Die in letzterem Fall gebildete Verengung zwischen dem ersten und zweiten Ringspalt führt zu einer Verstärkung des Venturieffekts und damit zu einer Erhöhung des Unterdrucks im Ansaugbereich.

Zur Gewährleistung eines möglichst geringen Abgasgegendrucks kann das Abgasrohr einen entlang des Mündungsbereichs gleichbleibenden Innendurchmesser aufweisen. Das Abgasrohr ist insbesondere aus einem nahtlos gezogenen Stahlrohr mit beidseitig glatt verlaufender Wandung hergestellt.

Ferner besteht die Möglichkeit, dass der Hitzemantel entlang seines Umfangs eine Vielzahl von in den Konvektionsbereich mündenden Luftzufuhröffnungen aufweist, sodass eine kontinuierliche Versorgung mit Luft aus der Umgebung sichergestellt ist. Die Luftzufuhröffnungen können hierbei als entlang des Umfangs des Hitzemantels verteilte Einlassschlitze ausgebildet sein.

Die erfindungsgemäße Vorrichtung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: ein Ausführungsbeispiel der erfindungsgemäßen Vorrichtung zur Kühlung eines Abgasstroms an einem landwirtschaftlichen Nutzfahrzeug, und
- Fig. 2: eine Detailansicht des in Fig. 1 dargestellten Ausführungsbeispiels der erfindungsgemäßen Vorrichtung im Längsschnitt.

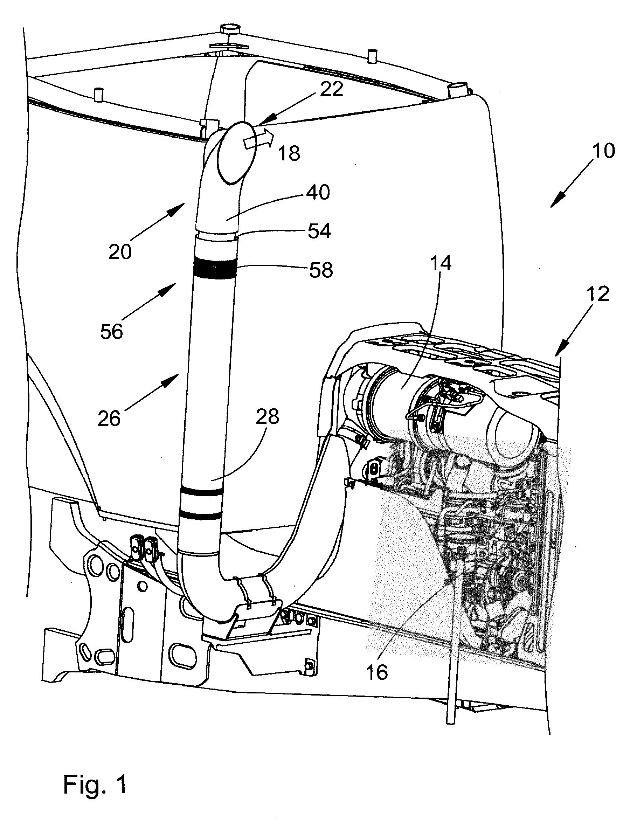

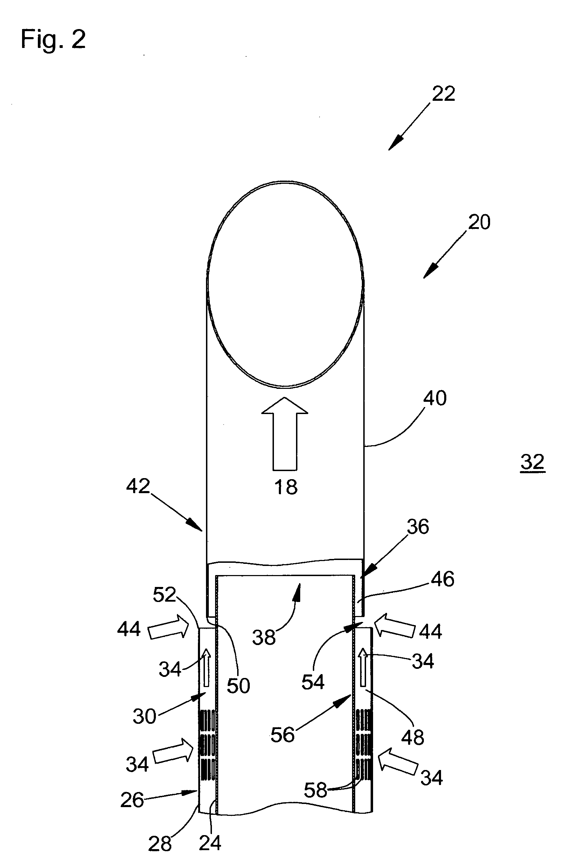

Fig. 1 zeigt ein Ausführungsbeispiel der erfindungsgemäßen Vorrichtung zur Kühlung eines Abgasstroms an einem landwirtschaftlichen Nutzfahrzeug in Gestalt eines Traktors, wobei Fig. 2 eine Detailansicht der erfindungsgemäßen Vorrichtung im Längsschnitt wiedergibt.

Das landwirtschaftliche Nutzfahrzeug 10 umfasst einen in einem Motorraum 12 untergebrachten Rußpartikelfilter 14, wobei dieser als herkömmlicher Wandstromfilter ausgebildet ist, bei dem das von einem Dieselmotor 16 des landwirtschaftlichen Nutzfahrzeugs 10 erzeugte Motorabgas eine poröse Filterwand aus einem keramischen oder metallischen Werkstoff durchdringt. Die im Motorabgas enthaltenen Rußpartikel lagern sich hierbei sowohl auf der Oberfläche als auch im Inneren der Filterwand des Rußpartikelfilters 14 ab. Da der Abgasgegendruck mit zunehmendem Zusetzungsgrad der Filterwand ansteigt, werden die abgelagerten Rußpartikel zur Regeneration des Rußpartikelfilters 14 in regelmäßigen Zeitabständen verbrannt, wozu die Temperatur des Motorabgases durch Verwendung eines dem Rußpartikelfilter 14 vorgeschalteten Oxidationskatalysators zeitweise auf Temperaturen über 500 °C erhöht wird.

Zur Kühlung des aus dem Rußpartikelfilter 14 austretenden Abgasstroms 18 umfasst die im Bereich eines Auspuffendrohrs 20 vorgesehene erfindungsgemäße Vorrichtung 22 ein den Abgasstrom 18 aufnehmendes Abgasrohr 24, wobei das Abgasrohr 24 zumindest entlang eines außerhalb des Motorraums 12 des landwirtschaftlichen Nutzfahrzeugs 10 verlaufenden Abschnitts von einem beabstandet angeordneten Hitzemantel 26 in Gestalt einer rohrförmigen Abdeckung 28 umgeben ist, der mit einer Außenseite des Abgasrohrs 24 einen Konvektionsbereich 30 für aus der Umgebung 32 zugeführte Luft 34 bildet. Ein gegenüber dem Hitzemantel 26 verlängerter Mündungsbereich 36 des Abgasrohrs 24 ragt derart in ein offenes Ende 38 eines angrenzenden Auslassstutzens 40 hinein, dass in einem zwischen dem Mündungsbereich 36 des Abgasrohrs 24 und dem Auslassstutzen 40 ausgebildeten Ansaugbereich 42 beim Aufsteigen der aufgrund des Abgasstroms 18 im Konvektionsbereich 30 erhitzten Luft 34 ein Unterdruck gegenüber der Umgebung 32 erzeugbar ist.

Genauer gesagt bildet der mittels des Hitzemantels 26 umgebene Mündungsbereich 36 des Abgasrohrs 24 eine mit dem Auslassstutzen 40 derart zusammenwirkende Düse, dass beim Aufsteigen der im Konvektionsbereich 30 erhitzten Luft 34 aufgrund des Venturieffekts ein Unterdruck im Ansaugbereich 42 hervorgerufen wird. Die aufgrund des Unterdrucks in den Auslassstutzen 40 angesaugte Umgebungsluft 44 führt dabei je nach deren Temperatur zu einer entsprechenden Abkühlung des am Auslassstutzen 40 austretenden Abgasstroms 18.

Das Abgasrohr 24 weist zumindest im Mündungsbereich 36 einen in vertikaler Richtung orientierten Verlauf auf, sodass ein Aufsteigen der erhitzten Luft 34 im Konvektionsbereich 30 begünstigt wird.

Wie am Besten in Fig. 2 zu erkennen ist, ist der Ansaugbereich 42 als zwischen dem Auslassstutzen 40 und dem Abgasrohr 24 radial verlaufender erster Ringspalt 46 und/oder der Konvektionsbereich 30 als zwischen dem Hitzemantel 26 und dem Abgasrohr 24 radial verlaufender zweiter Ringspalt 48 ausgebildet. Demgemäß weisen das Abgasrohr 24, der Hitzemantel 26 sowie der Auslassstutzen 40 einen zumindest im Mündungsbereich 36 des Abgasrohrs 24 im Wesentlichen kreisförmigen Querschnitt auf. Hierbei sind der Hitzemantel 26 sowie der Auslassstutzen 40 gegenüber dem Mündungsbereich 36 des Abgasrohrs 24 konzentrisch angeordnet. Sowohl der Auslassstutzen 40 wie auch der Hitzemantel 26 sind hierbei mittels nicht dargestellter radial angeordneter Abstandshalter an der Außenseite des Abgasrohrs 24 befestigt.

Beispielsgemäß weist der erste Ringspalt 46 im Mündungsbereich 36 des Abgasrohrs 24 einen gegenüber dem zweiten Ringspalt 48 verringerten Außendurchmesser auf. Die solchermaßen gebildete Verengung zwischen dem ersten und zweiten Ringspalt 46 und 48 führt zu einer Verstärkung des Venturieffekts und damit zu einer Erhöhung des Unterdrucks im Ansaugbereich 42. Alternativ besteht die Möglichkeit, dass der erste Ringspalt 46 im Mündungsbereich 36 des Abgasrohrs 24 einen mit dem zweiten Ringspalt 48 übereinstimmenden Außendurchmesser aufweist.

Der Auslassstutzen 40 ist bezüglich des Hitzemantels 26 derart beabstandet angeordnet, dass gegenüberliegende Endbereiche 50 und 52 des Auslassstutzens 40 und des Hitzemantels 26 eine mit dem Ansaugbereich 42 in Verbindung stehende ringförmige Ansaugöffnung 54 bilden. Der Ansaugbereich 42 kann hierbei von einem nicht dargestellten Filterelement in Gestalt eines Lochgitters umgeben sein. Die Öffnungen des Lochgitters sind derart bemessen, dass vor allem gröbere Verunreinigungen, die zu einem raschen Zusetzen oder zu einem Verstopfen des Ansaugbereichs 42 führen würden, zuverlässig zurückgehalten werden.

Zur Gewährleistung eines möglichst geringen Abgasgegendrucks weist das Abgasrohr 24 einen entlang des Mündungsbereichs 36 gleichbleibenden Innendurchmesser auf. Das Abgasrohr 24 ist hierbei aus einem nahtlos gezogenen Stahlrohr mit beidseitig glatt verlaufender Wandung hergestellt.

Ferner weist der Hitzemantel 26 entlang seines Umfangs eine Vielzahl von in den Konvektionsbereich 30 mündenden Luftzufuhröffnungen 56 auf. Die Luftzufuhröffnungen 56 sind als entlang des Umfangs des Hitzemantels 26 verteilte Einlassschlitze 58 ausgebildet, wobei sich diese im vorliegenden Fall in mehreren übereinander liegenden Reihen unterhalb der ringförmigen Ansaugöffnung 54 befinden.

Auch wenn es sich bei dem in Fig. 1 dargestellten landwirtschaftlichen Nutzfahrzeug 10 beispielsgemäß um einen Traktor handelt, ist eine Verwendung der erfindungsgemäßen Vorrichtung 22 ebenfalls bei beliebigen anderen, von einem Dieselmotor angetriebenen Kraftfahrzeugen denkbar. Daneben bietet sich auch ein Einsatz im Falle stationärer Anwendungen, wie beispielsweise eines von einem Dieselmotor angetriebenen Stromaggregats oder dergleichen, an.

## Patentansprüche

1. Vorrichtung zur Kühlung eines Abgasstroms, mit einem den Abgasstrom (18) aufnehmenden Abgasrohr (24), wobei das Abgasrohr (24) zumindest abschnittsweise von einem beabstandet angeordneten Hitzemantel (26) umgeben ist, der mit einer Außenseite des Abgasrohrs (24) einen Konvektionsbereich (30) für aus der Umgebung (32) zugeführte Luft (34) bildet, **dadurch gekennzeichnet, dass** ein gegenüber dem Hitzemantel (26) verlängerter Mündungsbereich (36) des Abgasrohrs (24) derart in ein offenes Ende (38) eines angrenzenden Auslassstutzens (40) hineinragt, dass in einem zwischen dem Mündungsbereich (36) des Abgasrohrs (24) und dem Auslassstutzen (40) ausgebildeten Ansaugbereich (42) beim Aufsteigen der aufgrund des Abgasstroms (18) im Konvektionsbereich (30) erhitzten Luft (34) ein Unterdruck gegenüber der Umgebung (32) erzeugbar ist, wobei der Auslassstutzen (40) bezüglich des Hitzemantels (26) derart beabstandet angeordnet ist, dass gegenüberliegende Endbereiche (50, 52) des Auslassstutzens (40) und des Hitzemantels (26) eine mit dem Ansaugbereich (42) in Verbindung stehende ringförmige Ansaugöffnung (54) bilden.

2. Vorrichtung nach Anspruch 1, **dadurch gekennzeichnet, dass** das Abgasrohr (24) zumindest im Mündungsbereich (36) einen in vertikaler Richtung orientierten Verlauf aufweist.

3. Vorrichtung nach Anspruch 1 oder 2, **dadurch gekennzeichnet, dass** der Ansaugbereich (42) als zwischen dem Auslassstutzen (40) und dem Abgasrohr (24) radial verlaufender erster Ringspalt (46) und/oder der Konvektionsbereich (30) als zwischen dem Hitzemantel (26) und dem Abgasrohr (24) radial verlaufender zweiter Ringspalt (48) ausgebildet ist.

4. Vorrichtung nach einem der Ansprüche 1 bis 3, **dadurch gekennzeichnet, dass** der erste Ringspalt (46) im Mündungsbereich (36) des Abgasrohrs (24) einen mit dem zweiten Ringspalt (48) übereinstimmenden oder gegenüber diesem verringerten Außendurchmesser aufweist.

5. Vorrichtung nach einem der Ansprüche 1 bis 4, **dadurch gekennzeichnet, dass** das Abgasrohr (24) einen entlang des Mündungsbereichs (36) gleichbleibenden Innendurchmesser aufweist.

6. Vorrichtung nach einem der Ansprüche 1 bis 5, **dadurch gekennzeichnet, dass** der Hitzemantel (26) entlang seines Umfangs eine Vielzahl von in den Konvektionsbereich (30) mündenden Luftzufuhröffnungen (56) aufweist.

7. Kraftfahrzeug, insbesondere landwirtschaftliches Nutzfahrzeug, mit einer Vorrichtung (22) zur Kühlung eines Abgasstroms (18) nach einem der Ansprüche 1 bis 6.

## Claims

1. Device for cooling an exhaust gas stream, having an exhaust gas pipe (24) receiving the exhaust gas stream (18), the exhaust gas pipe (24) being surrounded at least in places by a heat shield (26) arranged spaced therefrom, which together with the outside of the exhaust gas pipe (24) forms a convection region (30) for air (34) supplied from the surrounding environment (32), **characterized in that** a mouth region (36) of the exhaust gas pipe (24) extended relative to the heat shield (26) projects in such a way into an open end (38) of an adjoining outlet port (40) that a reduced pressure relative to the surrounding environment (32) may be produced in a suction region (42) between the mouth region (36) of the exhaust gas pipe (24) and the outlet port (40) as the air (34) heated in the convection region (30) due to the exhaust gas stream (18) rises, wherein the outlet port (40) is arranged spaced from the heat shield (26) in such a way that opposing end regions (50, 52) of the outlet port (40) and of the heat shield (26) form an annular suction opening (54) connected with the suction region (42).

2. Device according to Claim 1, **characterized in that** the exhaust gas pipe (24) has a vertically oriented profile at least in the mouth region (36).

3. Device according to Claim 1 or 2, **characterized in that** the suction region (42) takes the form of a first annular gap (46) extending radially between the outlet port (40) and the exhaust gas pipe (24) and/or the convection region (30) takes the form of a second annular gap (48) extending radially between the heat shield (26) and the exhaust gas pipe (24).

4. Device according to one of Claims 1 to 3, **characterized in that** in the mouth region (36) of the exhaust gas pipe (24) the first annular gap (46) has an external diameter matching the second annular gap (48) or smaller than the latter.

5. Device according to one of Claims 1 to 4, **characterized in that** the exhaust gas pipe (24) has an internal diameter which remains the same over the mouth region (36).

6. Device according to one of Claims 1 to 5, **characterized in that** the heat shield (26) comprises a plurality of air supply openings (56) over its circumference leading into the convection region (30).

7. Motor vehicle, in particular an agricultural utility vehicle, having a device (22) for cooling an exhaust gas stream (18) according to one of Claims 1 to 6.

## Revendications

1. Dispositif destiné au refroidissement d'un flux de gaz d'échappement, comprenant un tuyau d'échappement (24) recevant le flux de gaz d'échappement (18), le tuyau d'échappement (24) étant au moins entouré en partie par une enveloppe thermique (26) disposée à distance, qui forme, avec un côté extérieur du tuyau d'échappement (24), une région de convection (30) pour l'air (34) acheminé hors de l'environnement (32), **caractérisé en ce qu'**une région d'embouchure (36) du tuyau d'échappement (24), prolongée par rapport à l'enveloppe thermique (26), pénètre dans une extrémité ouverte (38) d'un raccord de sortie adjacent (40) de telle sorte que dans une région d'aspiration (42) réalisée entre la région d'embouchure (36) du tuyau d'échappement (24) et le raccord de sortie (40), lors de la montée de l'air chauffé (34) dans la région de convection (30) du fait du courant de gaz d'échappement (18), une dépression puisse être générée par rapport à l'environnement (32), le raccord de sortie (40) étant disposé à distance par rapport à l'enveloppe thermique (26), de telle sorte que des régions d'extrémité opposées (50, 52) du raccord de sortie (40) et de l'enveloppe thermique (26) forment une ouverture d'aspiration annulaire (54) en liaison avec la région d'aspiration (42).

2. Dispositif selon la revendication 1, **caractérisé en ce que** le tuyau d'échappement (24) présente, au moins dans la région d'embouchure (36), une allure orientée dans la direction verticale.

3. Dispositif selon la revendication 1 ou 2, **caractérisé en ce que** la région d'aspiration (42) est réalisée sous forme de première fente annulaire (46) s'étendant radialement entre le raccord de sortie (40) et le tuyau d'échappement (24) et/ou la région de convection (30) est réalisée sous forme de deuxième fente annulaire (48) s'étendant radialement entre l'enveloppe thermique (26) et le tuyau d'échappement (24).

4. Dispositif selon l'une quelconque des revendications 1 à 3, **caractérisé en ce que** la première fente annulaire (46) présente, dans la région d'embouchure (36) du tuyau d'échappement (24), un diamètre extérieur coïncidant avec la deuxième fente annulaire (48) ou réduit par rapport à celle-ci.

5. Dispositif selon l'une quelconque des revendications 1 à 4, **caractérisé en ce que** le tuyau d'échappement (24) présente un diamètre intérieur uniforme le long de la région d'embouchure (36).

6. Dispositif selon l'une quelconque des revendications 1 à 5, **caractérisé en ce que** l'enveloppe thermique (26) présente, le long de sa périphérie, une pluralité d'ouvertures d'alimentation d'air (56) débouchant dans la région de convection (30).

7. Véhicule automobile, en particulier véhicule utilitaire agricole comprenant un dispositif (22) pour refroidir un flux de gaz (18) selon l'une quelconque des revendications 1 à 6.
